## Europäisches Patentamt
## European Patent Office
## Office européen des brevets

(11) Veröffentlichungsnummer : **0 046 510**
**B1**

(12) **EUROPÄISCHE PATENTSCHRIFT**

(45) Veröffentlichungstag der Patentschrift :
28.12.83

(51) Int. Cl.³ : **F 16 C 27/06**, F 16 D 65/22

(21) Anmeldenummer : **81105778.5**

(22) Anmeldetag : **22.07.81**

(54) **Stützlager für eine Bremswelle.**

(30) Priorität : **21.08.80 DE 8022262 U**

(43) Veröffentlichungstag der Anmeldung :
**03.03.82 Patentblatt 82/09**

(45) Bekanntmachung des Hinweises auf die Patenterteilung : **28.12.83 Patentblatt 83/52**

(84) Benannte Vertragsstaaten :
**DE FR GB IT SE**

(56) Entgegenhaltungen :
**DE-A- 2 330 864**
**DE-B- 1 271 565**
**DE-B- 1 680 219**
**DE-U- 8 022 262**
**US-A- 1 940 302**
**US-A- 2 739 851**
**US-A- 2 923 579**

(73) Patentinhaber : **Bergische Achsenfabrik Fr. Kotz & Söhne**
**Am Ohlerhammer**
**D-5276 Wiehl 1 (DE)**

(72) Erfinder : **Steiner, Helmut**
**Freiherr-vom-Stein-Strasse·1**
**D-5276 Wiehl 1 (DE)**
Erfinder : **Holländer, Erich**
**Im Krahnöchel 9**
**D-5276 Wiehl 1 (DE)**

(74) Vertreter : **Patentanwälte Dipl.-Ing. Alex Stenger Dipl.-Ing. Wolfram Watzke Dipl.-Ing. Heinz J. Ring**
**Kaiser-Friedrich-Ring 70**
**D-4000 Düsseldorf 11 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Stützlager für eine Bremswelle

Die Erfindung betrifft ein Stützlager für eine Bremswelle eine Innenbackenbremse mit einer am Achskörper befestigten Stützplatte und zwei mit dieser verbundenen Blechschalen sowie einer zwischen den Blechschalen eingespannten Lagerbuchse.

Stützlager der vorstehend beschriebenen Gattung für eine Bremswelle einer Innenbackenbremse sind bekannt. Sie bestehen aus einer am Achskörper befestigten Stützplatte, an der ein die Bremswelle umgebendes Gleitlager befestigt ist. Das Gleitlager wird von einem Gleitkörper aus Sinterstahl gebildet, der von den beiden Blechschalen umgeben ist und mit diesen an der Stützplatte zentriert wird. Dieses bekannte Gleitlager hat den Nachteil, daß es von Zeit zu Zeit nachgeschmiert werden muß.

Aus der DE-B-16 80 219 ist ein Stützlager für eine Bremswelle einer Innenbackenbremse bekannt, welches aus einer am Achskörper befestigten Stützplatte und zwei mit dieser verbundenen Blechschalen sowie einer zwischen den Blechschalen eingespannten Lagerbuchse aus Kunststoff besteht. Diese bekannte Kunststoffbuchse ist in dem von den beiden Blechschalen gebildeten Gehäuse schwenkbar und besitzt eine mit Schmiermittelnuten versehene Bohrung, die einen etwas größeren Durchmesser als die Bremswelle hat, damit diese sich in der Kunststoffbuchse ohne Festfressen frei drehen kann. Auch dieses bekannte Stützlager ist nicht wartungsfrei und muß von Zeit zu Zeit nachgeschmiert werden.

Davon ausgehend liegt der Erfindung die Aufgabe zugrunde, ein einfach konstruiertes, wartungsfreies Stützlager für eine Bremswelle einer Innenbackenbremse zu schaffen, welches auch einfach montiert und demontiert werden kann.

Zur Lösung dieser Aufgabe wird vorgeschlagen, daß die Lagerbuchse aus Gummi besteht, wobei die Gummibuchse mit den Blechschalen rutschfest auf der Bremswelle vorgespannt ist.

In weiterer Ausgestaltung der Erfindung können die beiden Blechschalen in ihrem Mantel mit Verankerungslöchern für die Gummibuchse versehen sein. Außerdem hat es sich als zweckmäßig erwiesen, die beiden Blechschalen auf der gleichen Seite an der Stützplatte zu befestigen, und zwar auf der zum Bremshebel hin zeigenden Seite. Bei dieser Anordnung ist es möglich, das Stützlager nach einer Demontage des Bremshebels und dem Lösen der Befestigungsschrauben von der Bremswelle abzuziehen, ohne die Bremswelle selbst demontieren zu müssen.

Ein erfindungsgemäß ausgebildetes Stützlager hat einerseits den Vorteil eines sehr einfachen und preiswerten Aufbaues und anderseits den weiteren Vorteil, daß es vollständig wartungsfrei ist. Dafür muß das Volumen der Gummibuchse so groß gewählt werden, daß mit den Blechschalen eine rutschfeste Vorspannung auf der Bremswelle möglich ist. Der Verdrehwinkel wird dann von der Gummibuchse ohne Schlupf auf der Bremswelle ausgeglichen. Die Verankerungslöcher im Mantel der beiden Blechschalen verhindern einen Schlupf der Gummibuchse im Verhältnis zu den Blechschalen. Durch die schlupffreie Lagerung der Bremswelle im Stützlager mit der erfindungsgemäß angeordneten und ausgebildeten Gummibuchse entstehen beim Betätigen der Bremse Rückstellkräfte im Stützlager. Schließlich besteht noch ein Vorteil der Erfindung darin, daß infolge der schlupffreien Lagerung eine Sonderbearbeitung der Bremswelle im Bereich des Stützlagers nicht mehr erforderlich ist.

Weitere Einzelheiten und Vorteile des Gegenstandes der Erfindung ergeben sich aus der nachfolgenden Beschreibung der zugehörigen Zeichnung, in der eine bevorzugte Ausführungsform eines erfindungsgemäß ausgebildeten Stützlagers schematisch dargestellt worden ist. In der Zeichnung zeigen :

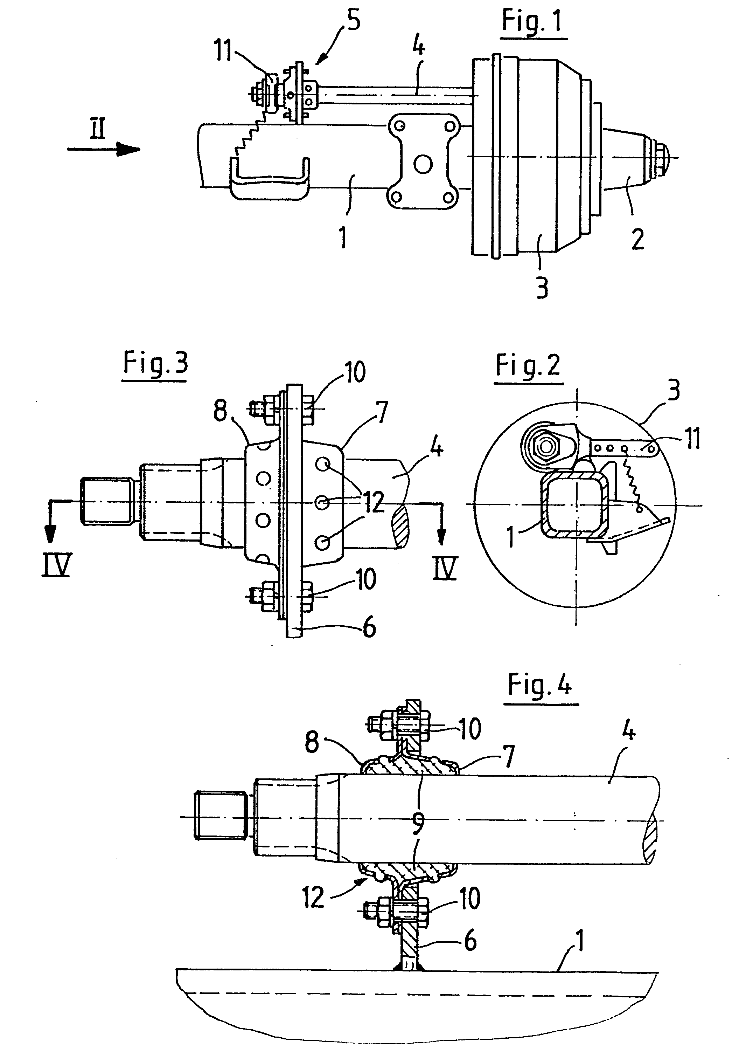

Figur 1 eine Hälfte einer Achse mit einer Innenbackenbremse und einer Bremswelle in Draufsicht ;

Figur 2 dieselbe Achse in Richtung des Pfeiles II in Seitenansicht ;

Figur 3 eine vergrößerte Darstellung des Stützlagers in Draufsicht ;

Figur 4 die vergrößerte Darstellung des Stützlagers entlang der Linie IV-IV in Fig. 3 geschnitten.

An einem Achskörper 1 ist eine Radnabe 2 mit einer daran befestigten Bremstrommel 3 drehbar gelagert. In der Bremstrommel 3 ist eine — nicht dargestellte — Innenbackenbremse angeordnet, die über eine Bremswelle 4 betätigt wird.

Außerhalb der Bremstrommel 3 ist die Bremswelle 4 mit einem Stützlager 5 am Achskörper 1 gelagert. Das Stützlager 5 besteht aus einer am Achskörper 1 befestigten Stützplatte 6, zwei Blechschalen 7, 8, einer Gummibuchse 9 und mehreren Befestigungsschrauben 10. Beide Blechschalen 7, 8 sind auf der gleichen Seite der Stützplatte 6 mit den Befestigungsschrauben 10 zusammengespannt, und zwar auf der zu einem Bremshebel 11 hin zeigenden Seite. Auf diese Weise kann das Stützlager 5 auf die Bremswelle 4 aufgeschoben oder von dieser wieder abgezogen werden, wenn der Bremshebel 11 nicht aufgesteckt ist.

Die Gummibuchse 9 wird mit den beiden Blechschalen 7, 8 zusammengedrückt und mit Vorspannung auf die Bremswelle 4 gepreßt. Dabei drückt sich die Gummibuchse warzenförmig in Verankerungslöcher 12 der beiden Blechschalen 7 und 8. Auf diese Weise wird auch ein Schlüpfen der Gummibuchse 9 im Verhältnis zu den beiden Blechschalen 7, 8 verhindert.

Alle in der Beschreibung erwähnten und in der Zeichnung dargestellten neuen Merkmale sind erfindungswesentlich, auch soweit sie in den Ansprüchen nicht ausdrücklich gekennzeichnet worden sind.

Bezugszeichenliste

1 Achskörper
2 Radnabe
3 Bremstrommel
4 Bremswelle
5 Stützlager
6 Stützplatte
7 Blechschale
8 Blechschale
9 Gummibuchse
10 Befestigungsschraube
11 Bremshebel
12 Verankerungsloch

**Ansprüche**

1. Stützlager für eine Bremswelle einer Innenbackenbremse mit einer am Achskörper befestigten Stützplatte und zwei mit dieser verbundenen Blechschalen sowie einer zwischen den Blechschalen eingespannten Lagerbuchse, dadurch gekennzeichnet, daß die Lagerbuchse aus Gummi besteht, wobei die Gummibuchse (9) mit den Blechschalen (7, 8) rutschfest auf der Bremswelle (4) vorgespannt ist.

2. Stützlager nach Anspruch 1, dadurch gekennzeichnet, daß die beiden Blechschalen (7, 8) in ihrem Mantel Verankerungslöcher (12) für die Gummibuchse (9) besitzen.

3. Stützlager nach den Ansprüchen 1 und 2, dadurch gekennzeichnet, daß die beiden Blechschalen (7, 8) auf der gleichen Seite an der Stützplatte (6) befestigt sind und ein die Bremswelle (4) umgebendes, enges Gehäuse für die Gummibuchse (9) bilden.

**Claims**

1. Support bearing for a brake shaft of brake with internal shoes having a support plate secured to the axle body and two sheet metal shells connected therewith together with a bearing bush clamped between the sheet metal shells, characterised in that, the bearing bush consists of rubber, the bearing bush (9) being pre-stressed with the sheet shells (7, 8) is secured against slipping on the brake shaft (4).

2. Support bearing according to claim 1, characterised in this that both sheet metal shells (7, 8) have within their overall volume apertures (12) for anchoring the rubber bush (9).

3. Support bearing according to claim 1 and 2, characterised in this that sheet metal shells (7, 8) are both supported on the same side on the support plate (6) and form a tight housing for the rubber bush (9) surrounding the brake shaft (4).

**Revendications**

1. Palier d'appui pour un arbre de frein d'un frein à mâchoires intérieures comportant une plaque d'appui fixée au corps d'essieu et deux coquilles en tôle reliées à cette dernière ainsi qu'une douille de palier serrée entre les coquilles en tôle, caractérisé en ce que la douille de palier est constituée par du caoutchouc, la douille en caoutchouc (9) étant serrée avec les coquilles en tôle (7, 8) sans glissement sur l'arbre de frein (4).

2. Palier d'appui selon la revendication 1, caractérisé en ce que les deux coquilles en tôle (7, 8) présentent dans leur enveloppe des trous d'ancrage (12) pour la douille en caoutchouc (9).

3. Palier d'appui selon les revendications 1 et 2, caractérisé en ce que les deux coquilles en tôle (7, 8) sont fixées sur le même côté sur la plaque d'appui (6) et forment un boîtier étroit entourant l'arbre de frein (4) pour la douille en caoutchouc (9).

0 046 510

Fig. 1

Fig. 3

Fig. 2

Fig. 4